# DEMANDE DE BREVET EUROPEEN

(11) **EP 1 775 242 A1**
(43) Date de publication de la demande: **18.04.2007**
(21) Numéro de dépôt: 06301025.0
(22) Date de dépôt: 06.10.2006
(51) Int. Cl.: B65G 1/137, B65G 61/00, B65G 57/30

(54) **Procédé de palettisation et dispositif pour sa mise en oeuvre**

(30) Priorité: 11.10.2005 FR 0553089
(71) Demandeur: Lucas Robotic, 33210 Langon (FR)
(72) Inventeur: LUCAS, Jean-Jacques, 33124, SAVIGNAC (FR)
(74) Mandataire: Fantin, Laurent

(57) **Abrégé**

L'objet de l'invention est un procédé de dépose d'un ensemble d'objets (22), appelée commande, sur un support telle qu'une palette (24), caractérisé en ce qu'il consiste à regrouper les objets en sous-ensembles, et à transférer sur un support (24) les sous-ensembles d'une même commande lorsque les sous-ensembles d'une commande sont achevés ou quasi achevés.

## Description

La présente invention se rapporte à un procédé ou un dispositif de palettisation plus particulièrement adapté pour rapporter sur un support tel qu'une palette un ensemble de produits de préférence hétérogènes.

Lors de l'acheminement de produits depuis une chaîne de fabrication jusqu'à un point de vente, les produits sont généralement conditionnés sur des palettes. En sortie de chaîne de fabrication, les palettes sont généralement constituées de produits identiques. Par la suite, les produits sont reconditionnés et les palettes comprennent un ensemble de produits hétérogènes en fonction notamment des besoins du point de vente auquel la palette est destinée, l'ensemble des produits, notamment hétérogènes, rassemblés sur une même palette étant appelé une commande.

Par produit, on entend un produit susceptible d'être empilé ou un emballage tel qu'une cagette en carton ou analogue contenant un ou plusieurs produits, ladite cagette étant susceptible d'être empilée.

Lors de cette phase de reconditionnement, selon une première variante, un préhenseur saisit chaque produit stocké par type de produits pour le déposer sur une palette. Ainsi, les palettes sont formées palette par palette, les commandes étant traitées les unes à la suite des autres. Ce mode opératoire ne donne pas satisfaction car le traitement des commandes est relativement long.

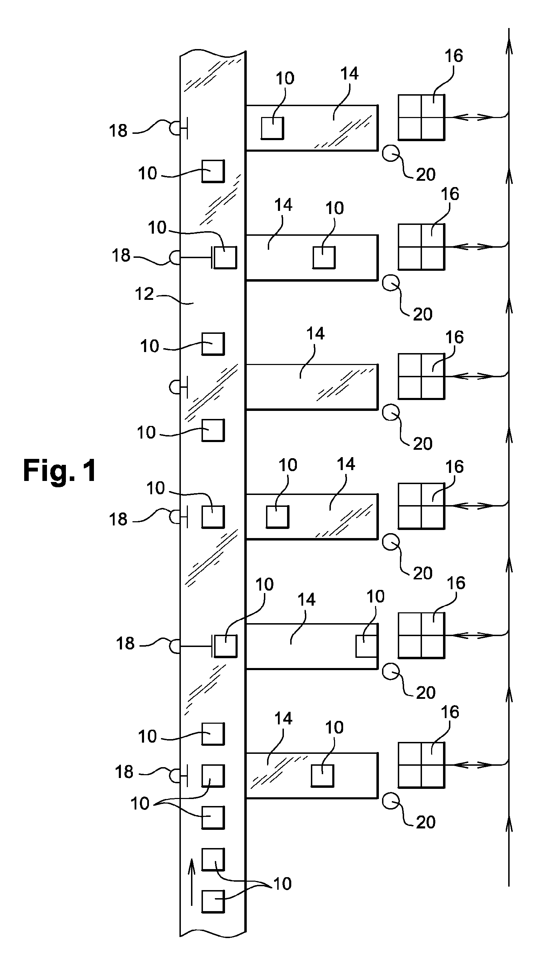

Pour réduire le temps de reconditionnement, plusieurs palettes peuvent être formées en même temps. Un dispositif mettant en oeuvre un tel mode opératoire est décrit sur la figure 1. Les produits 10 défilent sur un convoyeur principal 12, les uns à la suite des autres, chacun portant un moyen d'identification tel qu'un code à barres par exemple. Selon ce mode opératoire, des convoyeurs secondaires 14 sont prévus entre le convoyeur principal 12 et chaque palette 16 en cours de formation. A chaque intersection du convoyeur principal 12 et des convoyeurs secondaires 14, des moyens 18 sont prévus pour identifier le produit et pour le dévier si nécessaire depuis le convoyeur principal 12 vers le convoyeur secondaire 14 en fonction de la palette à laquelle le produit est destiné. A l'extrémité de chaque convoyeur, un opérateur 20 est prévu pour saisir le produit et le placer correctement sur la palette 16.

Même si ce mode opératoire permet d'obtenir un gain de temps grâce à la réalisation de plusieurs palettes de manière simultanée, il ne donne pas pleinement satisfaction car il nécessite l'intervention de plusieurs opérateurs qui effectuent une tâche relativement pénible. En variante, on pourrait envisager d'utiliser des préhenseurs pour remplacer les opérateurs. Toutefois, cette solution engendrerait une augmentation substantielle des coûts.

Enfin, le gain de temps étant directement lié au nombre de palettes constituées simultanément, il est nécessaire de prévoir un nombre important de convoyeurs secondaires 14, autant de préhenseurs et de postes d'immobilisation de palettes, ce qui nécessite une emprise au sol importante et complexifie sensiblement la gestion des palettes.

D'autre part, pour optimiser la palettisation de produits différents, certains dispositifs de l'art antérieur, tel ceux décrits dans les brevets US 5 415 518 et

DE 3814101, s'attachent uniquement à effectuer un tri desdits produits en fonction d'au moins une de leurs dimensions, le but recherché étant d'obtenir des étages ou des colonnes de produits de hauteur sensiblement égales de façon à assurer un gerbage stable desdits produits et/ou un chargement maximal de produits sur un même support. Cependant, les dispositifs décrits dans ces deux documents de l'art antérieur ne sont pas prévus pour effectuer un tri des produits par commande en vue de la constitution d'une palette. Ainsi, selon ces documents, les produits destinés à une même palette arrivent groupés et sont déposés sur une palette, la dépose étant effectuée palette après palette. Ces dispositifs ne donnent pas satisfaction car les commandes sont traitées les unes après les autres rendant le traitement des commandes relativement long.

Aussi, la présente invention vise à pallier les inconvénients de l'art antérieur en proposant un procédé de palettisation assurant la gestion de plusieurs commandes de manière simultanée, susceptible d'être mis en oeuvre avec un dispositif compact.

A cet effet l'invention a pour objet un procédé de dépose d'un ensemble d'objets, appelée commande, sur un support telle qu'une palette, caractérisé en ce qu'il consiste à regrouper les objets en sous-ensembles, et à transférer sur un support les sous-ensembles d'une même commande lorsque les sous-ensembles d'une commande sont achevés ou quasi achevés.

D'autres caractéristiques et avantages ressortiront de la description qui va suivre de l'invention, description donnée à titre d'exemple uniquement, en regard des dessins annexés sur lesquels :
- la figure 1 est une représentation schématique d'un dispositif de l'art antérieur,
- la figure 2A est une représentation schématique vue de côté d'un dispositif selon l'invention,
- la figure 2B est une représentation schématique vue de dessus du dispositif de la figure 2A,
- la figure 3 est une vue de dessus d'un mode de réalisation d'un dispositif selon l'invention,
- la figure 4 est une vue latérale du dispositif de la figure 3,
- la figure 5A est une vue latérale d'un préhenseur selon un mode de réalisation,
- la figure 5B est une vue en perspective du préhenseur de la figure 5A,
- la figure 6 est une vue latérale de la partie inférieure d'un magasin selon une variante de l'invention,
- les figures 7A et 7B sont des représentations schématiques vue de dessus de variantes du dispositif selon l'invention, et
- la figure 8 est une vue en élévation illustrant un exemple de palette reconditionnée.

La présente invention est décrite appliquée au conditionnement de cagettes en carton sur des palettes. Toutefois, la présente invention peut être appliquée à d'autres objets susceptibles d'être stockés sur un support.

Ainsi, pour la suite de la description on entend par objet tout produit ou tout emballage susceptible de contenir un ou plusieurs produits. De plus par palette, on entend tout support sur lequel peuvent être empilés des objets.

Le procédé de l'invention est plus particulièrement adapté pour regrouper sur une même palette différents types d'objets, le contenu des palettes pouvant varier d'une palette à l'autre. Par la suite, l'ensemble des objets empilés sur une palette est appelé une commande.

Ainsi, à titre d'exemple, une commande peut comprendre un nombre N1 d'un premier type d'objets T1, un nombre N2 d'un deuxième type d'objets T2, un nombre N3 d'un troisième type d'objets T3, un nombre Ni d'un ième type d'objets Ti, etc...

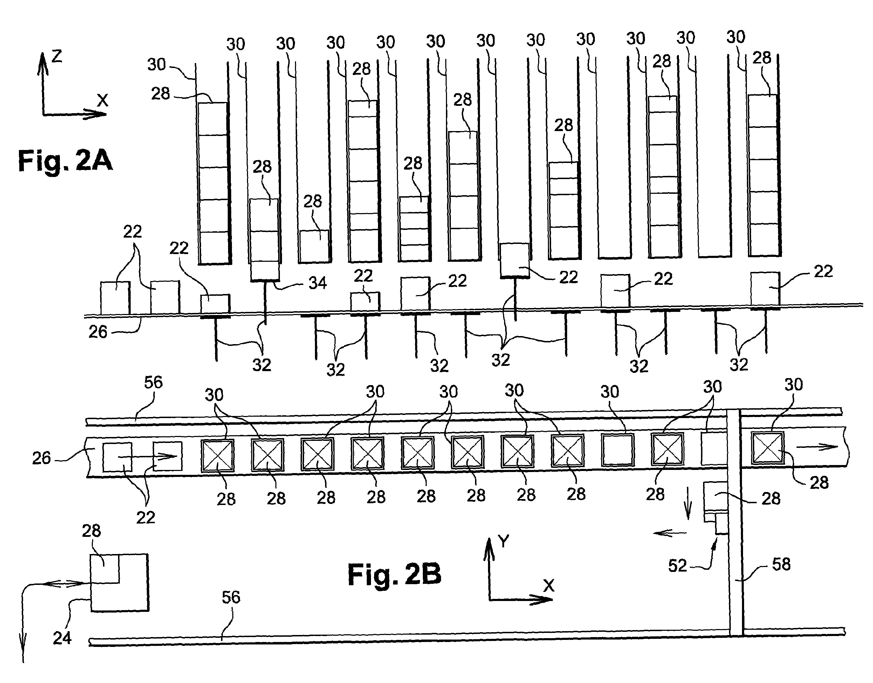

Comme illustré sur les figures 2A et 2B, le procédé de l'invention permet à partir d'un flux d'objets 22 de rassembler sur une palette 24 les objets d'une même commande, plusieurs commandes pouvant être traitées de manière simultanée.

De préférence, les objets sont stockés en amont généralement par type d'objets. En fonction des commandes à traiter, le nombre adéquat d'objets pour chaque type d'objets est mis en circulation sur un convoyeur d'alimentation 26. Les objets défilent les uns à la suite des autres et comprennent des moyens d'identification permettant de déterminer à quelle commande appartient chaque objet.

Selon l'invention, la commande est divisée en sous-ensembles d'objets, notamment en colonnes 28, qui sont déposées sur une palette 24 lorsqu'ils sont achevés.

Ainsi, le procédé de l'invention consiste à réaliser des colonnes 28 d'objets en fonction des commandes à réaliser, puis lorsque les colonnes 28 d'une même commande sont achevées, à regrouper lesdites colonnes 28 sur une palette 24. Selon l'invention, le nombre de commandes traitées simultanément n'est plus directement lié au nombre de palettes en cours de remplissage, l'étape de dépose sur une palette n'étant réalisée que lorsque les sous ensembles destinés à une même palette sont constitués. Cette caractéristique permet d'obtenir un dispositif plus compact, le nombre de palettes à gérer en même temps étant limité, tout en conservant une cadence de reconditionnement élevée.

Sur les figures 2A et 2B, on a représenté un dispositif selon une variante simplifiée de l'invention.

Le dispositif comprend un convoyeur d'alimentation 26 permettant de faire défiler les objets 22 à palettiser les uns à la suite des autres, une pluralité de magasins 30 disposés de préférence au dessus du convoyeur d'alimentation 26, dans lesquels sont susceptibles d'être stockés les objets 22 sous forme de colonne 28.

Au moins au niveau des magasins 30, les objets 22 défilent pas à pas et sont écartés d'une certaine distance de manière à marquer un temps d'arrêt au niveau de chaque magasin 30.

Le dispositif comprend également une pluralité d'actionneurs 32, un pour chaque magasin 30, susceptibles de transférer un objet depuis le convoyeur 26 d'alimentation jusqu'au magasin 30. Avantageusement, un capteur permettant d'identifier l'objet, notamment grâce aux moyens d'identification apposés sur chaque objet, est prévu au niveau de chaque actionneur 32. Selon un mode de réalisation, les actionneurs 32 sont disposés sous le convoyeur 26 et comprennent une motorisation et une crémaillère susceptibles d'assurer la translation d'un plateau 34. D'autres solutions techniques peuvent être envisagées pour assurer la translation du plateau 34. Ce dernier est capable d'occuper une première position dans laquelle la surface supérieure du plateau 34 est disposée en dessous ou au même niveau que la surface supérieure du convoyeur 26 d'alimentation et une seconde position, dite haute, permettant l'introduction d'un nouvel objet dans un magasin et son maintien.

Avantageusement, le plateau 34 se présente sous la forme d'une surface continue ou d'une série de rouleaux très rapprochés de manière à répartir la pression et réduire la pression surfacique susceptible d'être exercée sur l'objet pour ne pas l'abîmer lors de son introduction dans le magasin.

Selon un mode de réalisation, chaque magasin 30 comprend un conduit vertical permettant de positionner les objets les uns au dessus des autres, la section du conduit ayant des formes adaptées à celles des objets empilés. De préférence, le conduit comprend quatre cornières 36, en forme de L, disposées respectivement à chaque sommet d'un rectangle ou carré imaginaire.

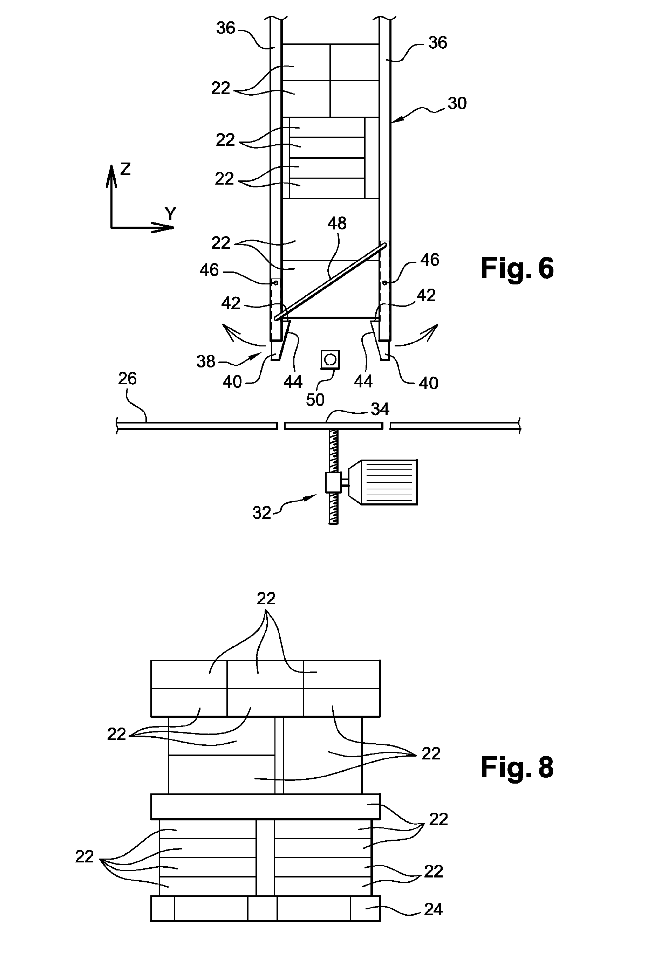

Selon une variante préférée et illustrée en détails sur la figure 6, chaque magasin 30 comprend des moyens 38 de retenue permettant d'une part d'empêcher la chute des objets disposés au-dessus, et d'autre part, l'introduction d'un nouveau objet depuis le bas.

Les moyens 38 de retenue comprennent deux sabots 40, disposés de préférence face à face, avec chacun une surface supérieure 42 contre laquelle est susceptible de reposer l'objet placé au bas d'une colonne 28 et une surface inférieure 44 inclinée contre laquelle est susceptible de prendre appui et de glisser un objet introduit dans le magasin. Chaque sabot 40 est susceptible de pivoter autour d'un axe 46 de manière à occuper une première position dans laquelle il retient les objets disposés au dessus, la colonne d'objets reposant sur la surface supérieure 42 des sabots 40, et une seconde position dans laquelle les sabots s'écartent de manière à permettre l'introduction d'un nouvel objet dans le magasin, l'objet en se translatant vers le haut provoquant l'écartement des sabots par pivotement autour des axes 46. Des moyens de rappels peuvent être prévus pour maintenir les sabots dans la première position.

Des moyens de synchronisation 48, par exemple une tringle reliant les sabots 40, peuvent être prévus afin de synchroniser les mouvements des sabots 40.

Selon une autre caractéristique de l'invention, la vitesse de déplacement des objets n'est pas constante lors de leur introduction dans les magasins. Ainsi, la vitesse de déplacement de l'objet qui est introduit dans le magasin est réduite juste avant que ledit objet vienne en contact avec les objets présents dans ledit magasin et de préférence lors de l'introduction de l'objet dans le magasin. Cette caractéristique permet d'éviter l'écrasement de l'objet lors de son introduction. La vitesse est de préférence seulement réduite au moment du contact de l'objet introduit avec les objets déjà empilés, ce qui permet le reste du temps du mouvement aller/retour de l'actionneur de conserver une vitesse relativement élevée afin d'obtenir une cadence de traitement élevée.

Selon un mode de réalisation, chaque magasin 30 comprend un capteur 50 de présence permettant de détecter l'objet juste avant que ce dernier ne vienne en contact avec les objets déjà présents dans le magasin, et des moyens de contrôle permettant à partir de l'information transmise par le capteur 50 de réguler la vitesse de l'actionneur 32 afin de réduire la vitesse de déplacement du plateau 34 au moins au moment du contact de l'objet introduit avec le ou les objets déjà présents dans le magasin.

Pour déplacer les objets des sous-ensembles d'une commande depuis les magasins 30 vers une palette 24, le dispositif de l'invention comprend au moins un préhenseur 52.

Le préhenseur 52 permet de soulever les objets empilés de manière à les retirer du magasin par le haut puis de transférer la colonne d'objets depuis le magasin vers la palette 24 au dessus des magasins 30.

Selon un mode de réalisation, le dispositif comprend au moins un pont roulant avec des montants 54 supportant deux rails 56 parallèles, correspondant à l'axe X, le long desquels est susceptible de se translater au moins une traverse 58, correspondant à l'axe Y, le long de laquelle est susceptible de se translater au moins un préhenseur 52, les dimensions des différents éléments étant adaptées de manière à permettre au préhenseur de se déplacer depuis n'importe quel magasin vers une palette 24.

Chaque préhenseur 52 comprend un montant 60 télescopique, correspondant à l'axe Z, avec une partie supérieure reliée à une traverse 58 et une tête 62 en partie inférieure.

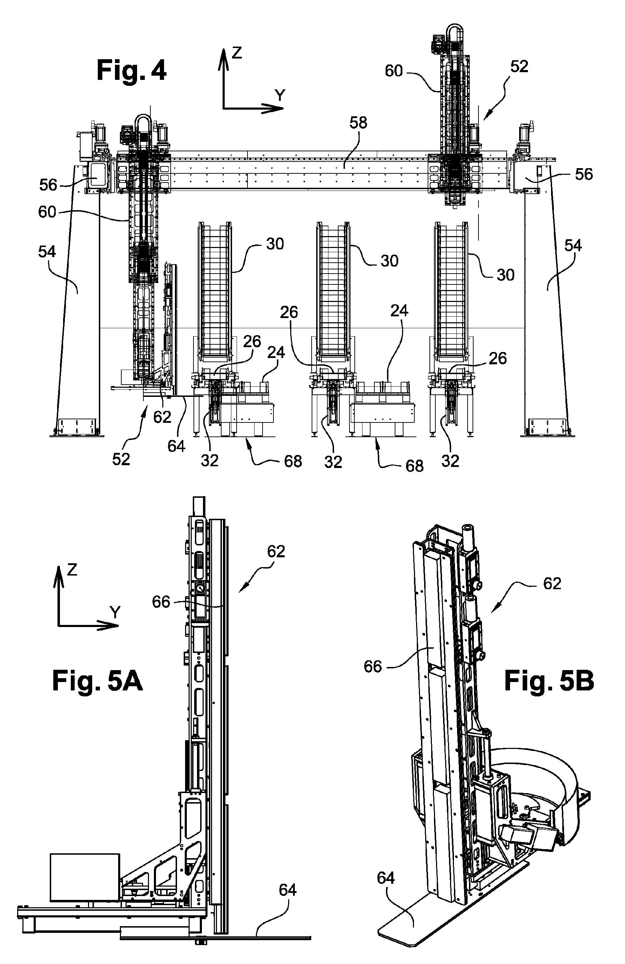

Un mode de réalisation de la tête 62 du préhenseur est illustré sur les figures 5A et 5B.

Avantageusement, la tête 62 est reliée au montant télescopique 60 par l'intermédiaire d'une articulation permettant à la tête 62 de pivoter autour de l'axe Z et éventuellement de s'incliner.

La tête 62 présente une forme en L avec une plaque 64 horizontale, appelée palette susceptible d'être placée sous la colonne d'objets. De préférence, la palette 64 est susceptible de se rétracter de manière à venir se positionner sous le montant télescopique afin de retirer ladite palette 64 de dessous une colonne sans avoir à déplacer le préhenseur. Avantageusement, la tête 62 comprend un montant vertical 66 susceptible de constituer une surface d'appui pour la colonne d'objets, ladite surface d'appui comprenant de préférence des moyens d'aspiration de manière à maintenir les objets de la colonne par aspiration.

Le dispositif comprend également au moins une zone 68 de remplissage au niveau de chacune desquelles est susceptible d'être immobilisée une palette 24. Des moyens d'alimentation, par exemple un convoyeur, peuvent être prévus pour acheminer des palettes au niveau de chaque zone de remplissage 68. De même, des moyens d'évacuation peuvent être prévus en aval de chaque zone de remplissage 68 pour évacuer les palettes 24 remplies.

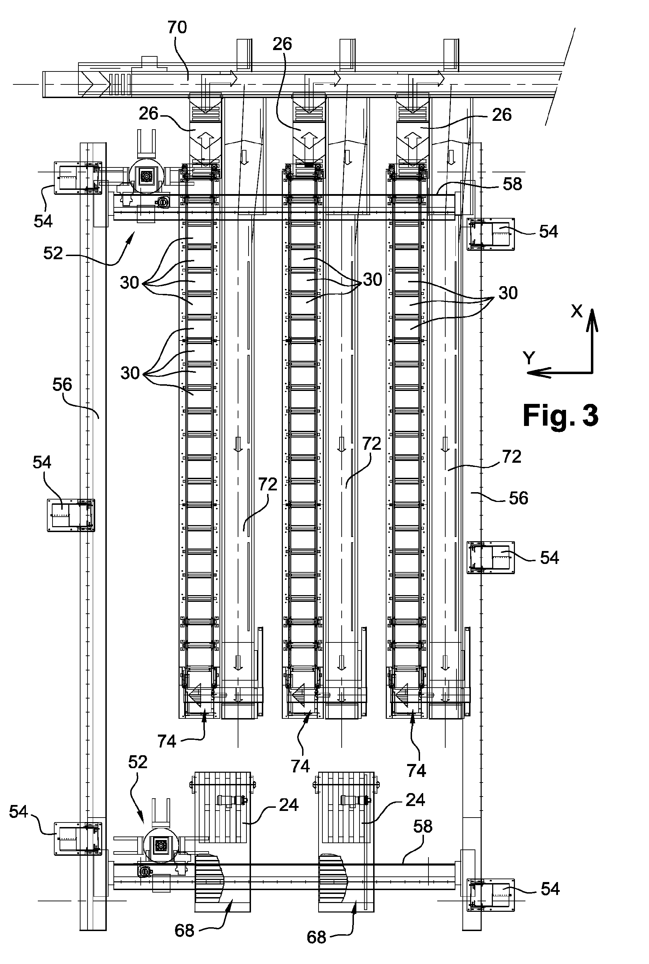

Sur les figures 3 et 4, on a représenté en détails un mode de réalisation d'un dispositif pour la mise en oeuvre du procédé. Les éléments communs à la variante simplifiée des figures 2A et 2B portent les mêmes références.

Ce dispositif comprend au moins un préhenseur 52, trois rangées de magasins 30 et deux postes 68 de remplissage au niveau de chacun desquels est prévue une palette 24.

Ce dispositif comprend en amont un convoyeur principal 70 qui achemine tous les objets à conditionner. Les objets sont déviés en fonction de leurs moyens d'identification vers des convoyeurs secondaires 72 chacun relié à un convoyeur d'alimentation 26 placé sous chaque rangée de magasins 30. Le convoyeur principal 70 et les convoyeurs secondaires 72 peuvent fonctionner en continu, des moyens 74 de répartition étant intercalés entre les convoyeurs secondaires 72 et les convoyeurs d'alimentation 26 afin de disposer les objets à équidistance les uns des autres. Comme illustré sur la figure 2A, les objets sont introduits dans les magasins 30 en fonction de la commande à laquelle ils appartiennent. Lorsque les colonnes d'une même commande sont achevées ou quasi achevées, le préhenseur 52 saisit les colonnes les unes après les autres pour les transporter vers l'une des palettes 24. Comme visible sur la figure 4, le préhenseur transfère les colonnes vers les palettes en navigant au-dessus des magasins 30 ce qui conduit à un gain de temps.

En variante, le préhenseur peut transporter plus d'une colonne.

Selon une variante de l'invention, on pourrait envisager de diviser la commande en sous-ensembles sous forme d'étages au lieu de colonnes, et de transférer sur une palette les différents étages d'une commande lorsque lesdits étages sont achevés.

Cependant la solution consistant à former des colonnes permet d'obtenir un dispositif plus compact et un gain de temps, une palette comportant généralement moins de colonnes que d'étages.

Selon une autre variante de l'invention, les magasins 30 pourraient être disposés sous un convoyeur d'alimentation en empilant par le haut.

Selon les variantes, les colonnes n'ont pas nécessairement le même format. Ainsi, le dispositif peut comprendre des magasins avec différentes sections. De plus, en fonction des modes opératoires, les magasins peuvent comprendre plusieurs colonnes juxtaposées ou à certains niveaux des objets juxtaposés sur un même niveau, comme illustré en partie supérieure du magasin de la figure 6.

Selon les variantes de fonctionnement, les colonnes peuvent être transférées par le préhenseur en totalité ou en partie, depuis les différents magasins vers une palette ou d'un magasin à un autre magasin.

Le ou les préhenseur(s) peuvent soulever la totalité d'une colonne en glissant la palette 64 sous l'objet situé au bas de la colonne ou seulement une partie supérieure de la colonne en soulevant légèrement les objets en partie supérieure de la colonne grâce aux moyens d'aspiration et en glissant sous le dernier objet la palette 64 de manière à soulever et déplacer ladite partie de colonne.

On a illustré sur la figure 8 un exemple de palette 24 réalisée à partir du procédé de l'invention.

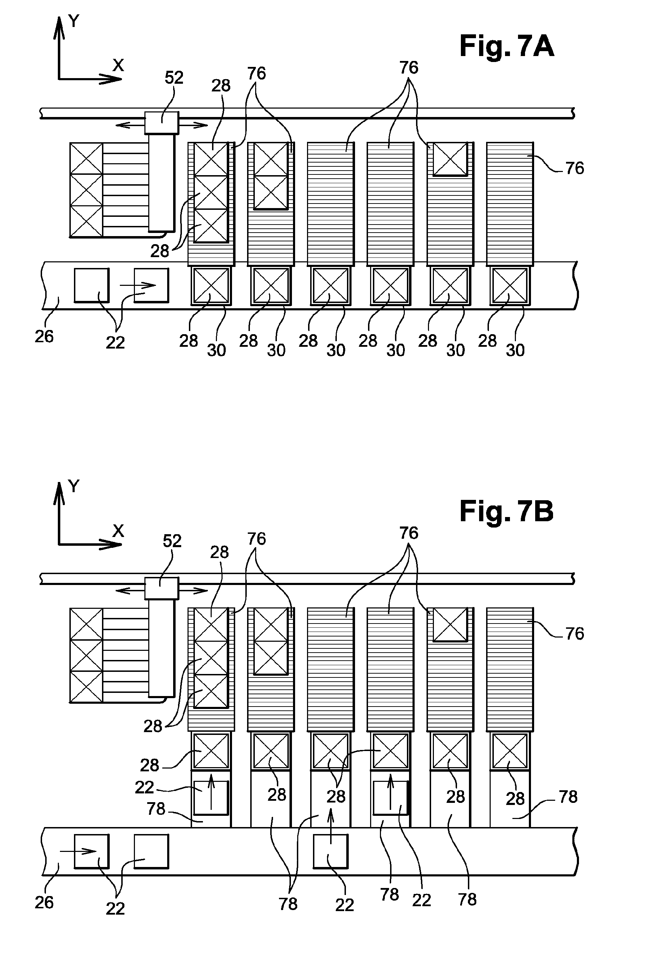

Sur les figures 7A et 7B, on a représenté des variantes du dispositif.

Selon une première variante illustrée sur la figure 7A, les magasins 30 dans chacun desquels peut être formée au moins une colonne 28, sont disposés au-dessus d'un convoyeur 26 d'alimentation comme précédemment. Selon cette variante, au moins un magasin 30, et de préférence tous, comprend chacun au moins une zone de stockage temporaire aval 76 juxtaposée audit magasin au niveau de laquelle sont susceptibles d'être disposées les colonnes formées dans ledit magasin avant d'être transférées sur une palette par au moins un préhenseur 52. Cette variante permet de pouvoir regrouper des colonnes avant de les transférer sur la palette. Selon un mode de réalisation, la zone de stockage temporaire aval se présente sous la forme d'un convoyeur à rouleau.

En complément, le magasin 30 comprend des moyens pour évacuer les colonnes en direction de la zone de stockage temporaire aval 76. Selon un mode de réalisation le plateau pour introduire les objets dans le magasin comprend des rouleaux motorisés.

Selon une autre variante illustrée sur la figure 7B, le dispositif comprend des zones de stockage temporaires avals 76 ainsi que des zones de stockage temporaires amonts 78 au niveau desquelles sont susceptibles d'être stockés des objets avant d'être introduits dans les magasins. Selon cette variante, les magasins 30 ne sont pas disposés au dessus du convoyeur 26 d'alimentation mais décalés. Ainsi, chaque magasin 30 est relié au convoyeur 26 d'alimentation par une zone de stockage temporaire amont 78. Ainsi, le convoyeur 26 d'alimentation comprend pour chaque zone de stockage temporaire amont 78 des moyens pour dévier les objets en direction desdites zones de stockage temporaires amonts 78 en fonction du magasin d'affectation.

Selon un mode de réalisation, chaque zone de stockage amont 78 se présente sous la forme d'un convoyeur qui achemine les objets depuis le convoyeur 26 d'alimentation jusqu'à la verticale des magasins 30. Ensuite, les objets sont introduits dans le magasin comme précédemment grâce à un actionneur 32.

Cette variante permet de séparer la fonction de triage réalisée entre le convoyeur 26 d'alimentation et les zones de stockage temporaires amonts 78 et la fonction d'empilage réalisée au niveau des magasins 30. Cette caractéristique permet éventuellement de stocker les objets avant d'être empilés ce qui permet d'augmenter la cadence si le temps pour l'opération d'empilage dans la colonne est plus important que le temps pour réaliser l'opération de triage.

En variante, le dispositif peut ne pas comprendre des zones de stockage temporaires avals 76 et seulement des zones de stockage temporaires amonts 78.

La présente invention permet avantageusement de trier des objets issus de commandes différentes et arrivant de manière aléatoire sur un convoyeur avant de les regrouper par commande et par palette de manière fictive et d'effectuer leur palettisation ou de les déposer sur un quelconque support.

Le procédé selon l'invention constitue ainsi, en regroupant les objets d'une même commande en sous-ensembles dans différents magasins, au moins une « palette fictive ». C'est uniquement lorsque suffisamment de sous-ensembles susceptibles de constituer une même « palette fictive » sont achevés ou quasiment achevés, que le support destiné à leur palettisation est acheminé vers le poste de remplissage.

Le temps et les zones de chargement et/ou de stockage d'une palette sur un poste de remplissage et plus généralement sur l'ensemble de la zone accueillant un dispositif selon l'invention sont ainsi réduits au minimum.

Bien entendu, l'invention n'est évidemment pas limitée au mode de réalisation représenté et décrit ci-dessus, mais en couvre au contraire toutes les variantes, notamment en ce qui concerne les dimensions, les formes et les matériaux des objets conditionnés et des supports sur lesquels les objets sont empilés.

## Revendications

1. Procédé de dépose d'un ensemble d'objets (22), appelé commande, sur un support telle qu'une palette (24), **caractérisé en ce qu'**il consiste à regrouper les objets d'une même commande en sous-ensembles, plusieurs commandes pouvant être traitées de manière simultanée, et à transférer sur un support (24) les sous-ensembles d'une même commande lorsque les sous-ensembles de ladite commande sont achevés ou quasi achevés.

2. Procédé selon la revendication 1, **caractérisé en ce qu'**il consiste à réaliser des sous-ensembles d'objets sous la forme de colonnes d'objets empilés.

3. Procédé selon la revendication 2, **caractérisé en ce qu'**il consiste à faire défiler pas à pas des objets les uns à la suite des autres de manière à ce que lesdits objets soient disposés à chaque temps d'arrêt au droit de magasins (30) dans chacun desquels est susceptible d'être formée au moins une colonne, à dévier lesdits objets en fonction de la commande à laquelle ils appartiennent vers l'un desdits magasins (30).

4. Procédé selon la revendication 3, **caractérisé en ce que** les objets sont introduits dans chaque magasin par le bas et **en ce que** la vitesse des objets est diminuée au moment où l'objet introduit vient en contact avec le ou les objets déjà empilé(s) dans le magasin (30).

5. Dispositif pour la mise en oeuvre du procédé selon l'une quelconque des revendications 1 à 4, **caractérisé en ce qu'**il comprend une pluralité de magasins (30) pour regrouper des objets en sous-ensembles en fonction de la commande à laquelle ils appartiennent et au moins un préhenseur (52) pour transférer les sous-ensembles d'une commande lorsque les sous-ensembles de ladite commande sont achevés ou quasi achevés.

6. Dispositif selon la revendication 5, **caractérisé en ce que** chaque magasin (30) comprend un conduit vertical permettant de positionner les objets les uns au dessus des autres.

7. Dispositif selon la revendication 6, **caractérisé en ce qu'** il comprend au moins un convoyeur (26) d'alimentation permettant de faire défiler pas à pas les objets (22) à palettiser les uns à la suite des autres, lesdits objets étant écartés d'une certaine distance de manière à marquer un temps d'arrêt au niveau de chaque magasin (30).

8. Dispositif selon la revendication 7, **caractérisé en ce que** les magasins (30) sont disposés au-dessus du ou des convoyeurs (26) d'alimentation, un actionneur (32) étant prévu au niveau de chaque magasin (30) pour introduire les objets par le bas des magasins (30).

9. Dispositif selon la revendication 8, **caractérisé en ce que** chaque magasin (30) comprend un capteur (50) permettant de détecter l'objet juste avant que ce dernier ne vienne en contact avec les objets déjà présents dans le magasin, et des moyens de contrôle permettant à partir de l'information transmise par le capteur (50) de réduire la vitesse de déplacement de l'objet introduit au moins au moment de son contact avec le ou les objets déjà présents dans le magasin.

10. Dispositif selon l'une quelconque des revendications 6 à 9, **caractérisé en ce** chaque magasin comprend des moyens (38) de retenue comportant deux sabots (40), disposés de préférence face à face, dont les mouvements sont synchronisés.

11. Dispositif selon l'une quelconque des revendications 5 à 10, **caractérisé en ce que** chaque préhenseur (52) comprend une tête (62) avec une plaque (64) horizontale susceptible d'être placée sous la colonne d'objets.

12. Dispositif selon la revendication 11, **caractérisé en ce que** la plaque horizontale (64) peut se rétracter afin de la retirer de dessous une colonne.

13. Dispositif selon la revendication 11 ou 12, **caractérisé en ce que** la tête (62) comprend un montant vertical (66) susceptible de constituer une surface d'appui pour la colonne d'objets, ladite surface d'appui comprenant des moyens d'aspiration de manière à maintenir les objets de la colonne par aspiration.
